# EUROPEAN PATENT APPLICATION

(11) **EP 4 843 892 A1**
(43) Date of publication of application: **25.11.2026**
(21) Application number: 26181086.5
(22) Date of filing: 26.05.2026
(51) Int. Cl.: B64D 33/08, F02C 7/18, F02C 7/06, F02C 9/18

(54) **AIRCRAFT WORKING FLUID SYSTEM WITH HEATED FLOW REGULATOR**

(30) Priority: 23.05.2025 US 202519217744
(71) Applicant: RTX Corporation, Farmington, CT 06032 (US)
(72) Inventor: CLARK, Thomas E., Wells, 04090 (US); YAZICI, Murat, Glastonbury, 06033 (US)
(74) Representative: Dehns

(57) **Abstract**

An aircraft powerplant assembly includes an electric device (106, 108) and a working fluid system (36). The working fluid system (36) includes a fluid circuit (144), an air circuit (146) and a heat exchanger (148). The fluid circuit (144) includes a fluid circuit path (150) configured to direct a working fluid through the fluid circuit path (150) to service the electric device (106, 108). The air circuit (146) includes an air circuit path (156) and a flow regulator (158). The air circuit (146) is configured to receive air into the air circuit path (156) through an airflow inlet (160) from an air source (54, 164). The air circuit (146) is configured to exhaust the air from the air circuit path (156) through an airflow outlet (162) into an air sink (84, 170) that is different than the air source (54, 164). The heat exchanger (148) is configured to transfer heat energy between the working fluid in the fluid circuit (144) and the air in the air circuit (146).

## Description

### Technical Field

This disclosure relates generally to an aircraft and, more particularly, to a working fluid system for a powerplant of the aircraft.

### Background Information

An aircraft powerplant such as an aircraft propulsion system includes various components which utilize air ventilation, fluid cooling and/or lubrication during aircraft powerplant operation. Various air ventilation, fluid cooling and/or lubrication systems and methods are known in the art. While these known air ventilation, cooling and/or lubrication systems and methods have various benefits, there is still room in the art for improvement.

### SUMMARY OF THE DISCLOSURE

According to an aspect of the present invention, an assembly is provided for an aircraft powerplant. This assembly includes an electric device and a working fluid system. The working fluid system includes a fluid circuit, an air circuit and a heat exchanger. The fluid circuit includes a fluid circuit path that extends through the heat exchanger. The fluid circuit is configured to direct a working fluid through the fluid circuit path to service the electric device. The air circuit includes an air circuit path and a flow regulator. The air circuit path extends through the heat exchanger and the flow regulator from an airflow inlet into the air circuit to an airflow outlet from the air circuit. The air circuit is configured to receive air into the air circuit path through the airflow inlet from an air source. The air circuit is configured to exhaust the air from the air circuit path through the airflow outlet into an air sink that is different than the air source. The heat exchanger is configured to transfer heat energy between the working fluid in the fluid circuit and the air in the air circuit.

According to another aspect of the present invention, an assembly is provided for an aircraft propulsion system. This assembly includes a housing structure, an engine core and a working fluid system. The housing structure extends axially along and circumferentially about an axis. The housing structure includes an internal compartment and forms an inner peripheral boundary of a bypass flowpath radially outboard of the internal compartment. The engine core is housed within the housing structure with the bypass flowpath bypassing the engine core. The engine core includes a compressor section, a combustor section and a turbine section. The working fluid system includes a fluid circuit, an air circuit and a heat exchanger. The fluid circuit includes a fluid circuit path that extends through the heat exchanger. The fluid circuit is configured to direct a working fluid through the fluid circuit path to cool and/or lubricate one or more components of the aircraft propulsion system. The air circuit includes an air circuit path and a flow regulator. The air circuit path extends through the heat exchanger and the flow regulator from an airflow inlet into the air circuit to an airflow outlet from the air circuit. The air circuit is configured to receive air into the air circuit path through the airflow inlet from the bypass flowpath. The air circuit is configured to exhaust the air from the air circuit path through the airflow outlet into the internal compartment. The heat exchanger is configured to transfer heat energy between the working fluid in the fluid circuit and the air in the air circuit.

According to still another aspect of the present invention, another assembly is provided for an aircraft propulsion system. This assembly includes a housing structure, an engine core, a vane structure, a heat exchanger and an air circuit. The housing structure extends axially along and circumferentially about an axis. The housing structure includes an internal compartment and forms an inner peripheral boundary of a bypass flowpath radially outboard of the internal compartment. The engine core is housed within the housing structure with the bypass flowpath bypassing the engine core. The engine core includes a compressor section, a combustor section and a turbine section. The vane structure is connected to the housing structure and projects radially across the bypass flowpath. The heat exchanger is disposed in an interior of the vane structure. The air circuit includes an air circuit path and a flow regulator. The air circuit path extends through the heat exchanger and the flow regulator from an airflow inlet into the air circuit to an airflow outlet from the air circuit. The air circuit is configured to receive air into the air circuit path through the airflow inlet from the bypass flowpath. The air circuit is configured to exhaust the air from the air circuit path through the airflow outlet into the internal compartment.

In an embodiments of the above, the one or more components of the aircraft propulsion system may be or otherwise include an electric device.

In an embodiment according to any of the previous embodiments, the heat exchanger may be configured to transfer the heat energy from the working fluid into the air to provide heated air. The air circuit may be configured to use the heated air to prevent and/or reduce icing at the flow regulator.

In an embodiment according to any of the previous embodiments, the electric device may be or otherwise include an electric machine configurable as an electric motor and/or an electric generator.

In an embodiment according to any of the previous embodiments, the assembly may also include an engine core, a flowpath and a rotating structure. The engine core may include a compressor section, a combustor section and a turbine section. The flowpath may extend through the compressor section, the combustor section and the turbine section. The rotating structure may be operatively coupled to the electric machine. The rotating structure may include a bladed rotor in the compressor section or the turbine section.

In an embodiment according to any of the previous embodiments, the fluid circuit may be configured to direct the working fluid through the fluid circuit path to cool and/or lubricate the electric machine.

In an embodiment according to any of the previous embodiments, the electric device may be or otherwise include an electronic controller.

In an embodiment according to any of the previous embodiments, the assembly may also include an electric machine configurable as an electric motor and/or an electric generator. The electronic controller may be electrically coupled to and configured to control operation of the electric machine.

In an embodiment according to any of the previous embodiments, the fluid circuit may be configured to direct the working fluid through the fluid circuit path to cool the electronic controller.

In an embodiment according to any of the previous embodiments, the flow regulator may be or otherwise include a control valve configured to meter a flow of the air through the air circuit path.

In an embodiment according to any of the previous embodiments, the air circuit may be configured without a flow regulator along the air circuit path between the heat exchanger and the airflow inlet.

In an embodiment according to any of the previous embodiments, the assembly may also include a housing structure configured to form an inner peripheral boundary of a flowpath within the aircraft powerplant. The flowpath may be configured as the air source.

In an embodiment according to any of the previous embodiments, an internal compartment within the housing structure may be configured as the air sink.

In an embodiment according to any of the previous embodiments, the electric device may be disposed in the internal compartment.

In an embodiment according to any of the previous embodiments, the aircraft powerplant may be a turbofan propulsion system. The flowpath may be a bypass flowpath configured to bypass an engine core of a turbine engine.

In an embodiment according to any of the previous embodiments, the assembly may also include a vane structure projecting out from the housing structure across the flowpath. The heat exchanger may be disposed in an interior of the vane structure.

In an embodiment according to any of the previous embodiments, the airflow inlet may be disposed at a leading edge of the vane structure.

In an embodiment according to any of the previous embodiments, the air sink may be or otherwise include an internal compartment within the aircraft powerplant. The air circuit may be configured to direct the air into the internal compartment to ventilate the internal compartment with the air exhausted from the air circuit through the air circuit outlet.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft propulsion system.
FIG. 2 is a schematic illustration of a portion of the aircraft propulsion system with an electric machine system, an electrical system and an accessory system.
FIG. 3 is a schematic illustration of a portion of the aircraft propulsion system with a working fluid system.
FIG. 4 is a schematic illustration of a portion of the aircraft propulsion system with the working fluid system having another flow regulator arrangement.

### DETAILED DESCRIPTION

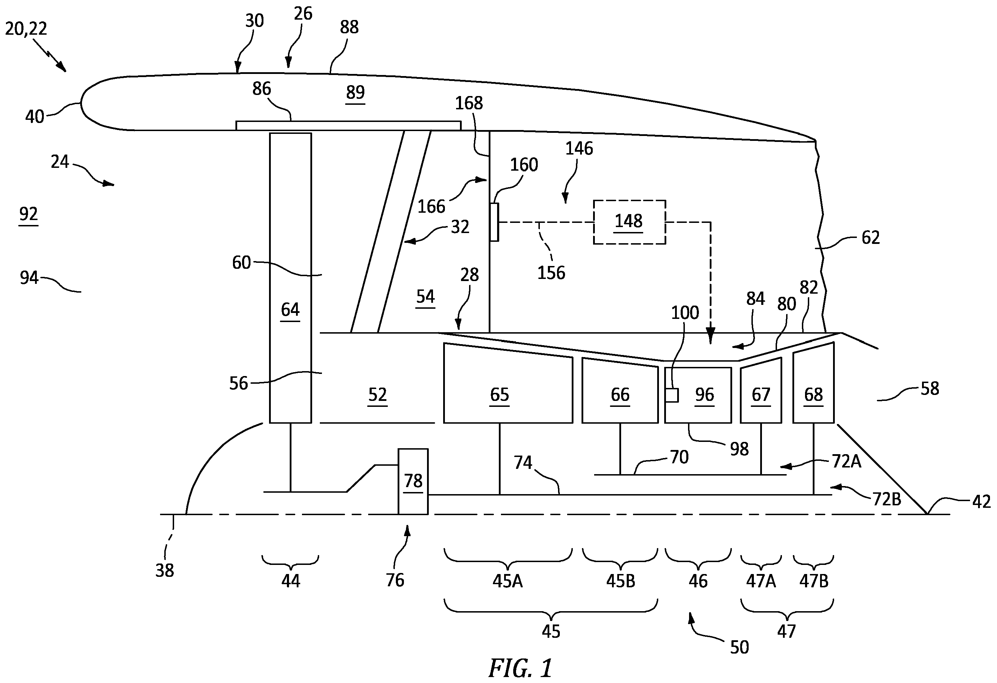

FIG. 1 illustrates a powerplant 20 for an aircraft. The aircraft may be an airplane, a drone (e.g., an unmanned aerial vehicle (UAV)) or any other manned or unmanned aerial vehicle or system. The aircraft powerplant 20 of FIG. 1 is configured as, or otherwise included as part of, a propulsion system 22 for the aircraft. For ease of description, this aircraft propulsion system 22 is described below as a ducted rotor propulsion system such as a turbofan propulsion system. The present disclosure, however, is not limited to such an exemplary aircraft propulsion system. The aircraft propulsion system 22, for example, may alternatively be configured as any other type of ducted or open rotor propulsion system with, for example, an internal bypass flowpath.

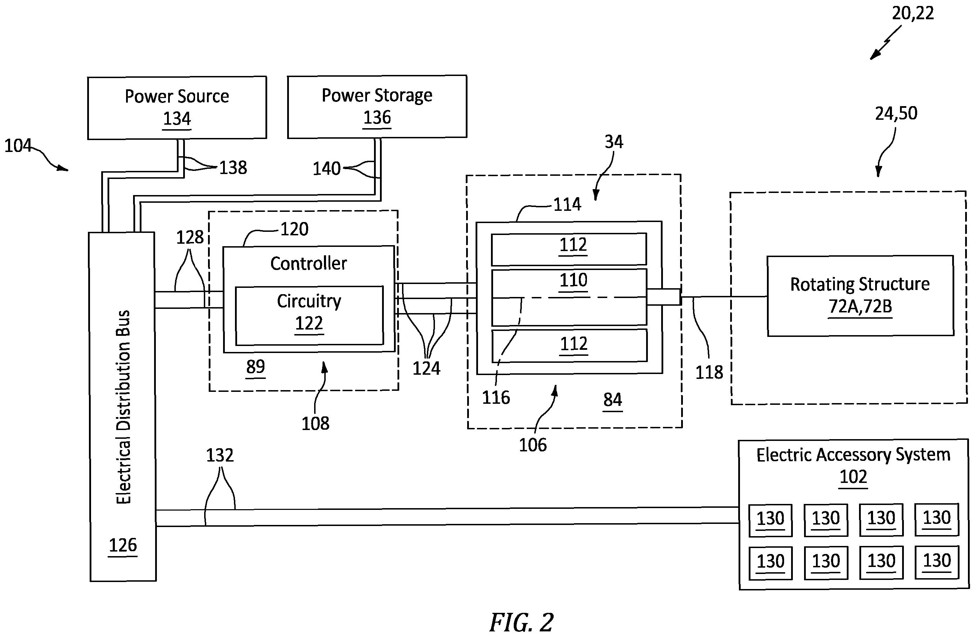

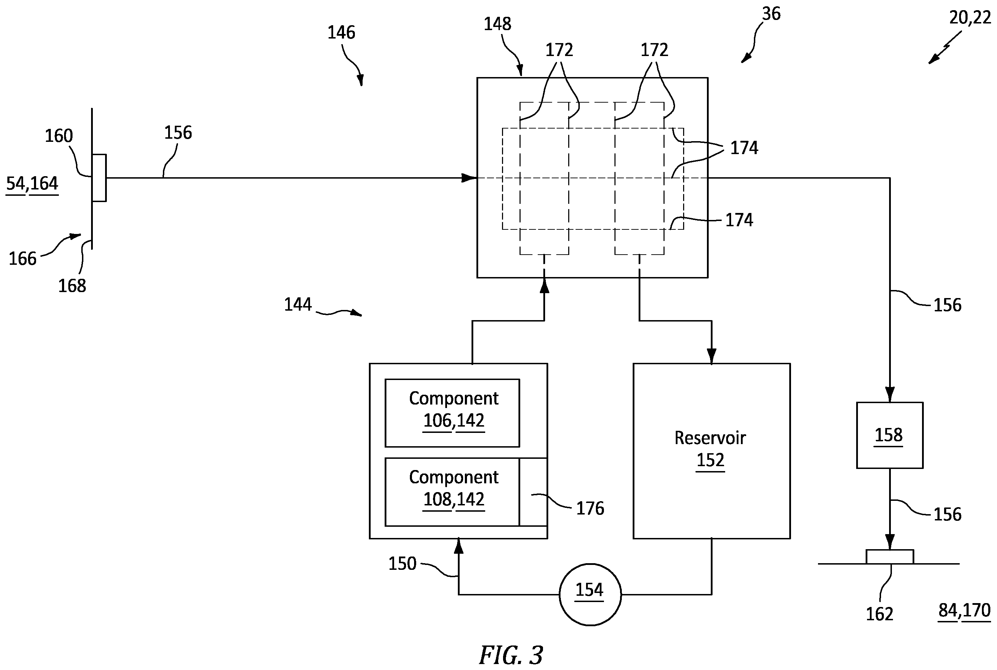

The aircraft propulsion system 22 includes a gas turbine engine 24 (e.g., a turbofan engine) housed within a stationary propulsion system housing 26. This propulsion system housing 26 of FIG. 1 includes an inner housing structure 28, an outer housing structure 30 and a guide vane structure 32 (e.g., a fan exit guide vane (FEGV) structure) extending radially between and connected to the inner housing structure 28 and the outer housing structure 30. The aircraft propulsion system 22 also includes an electric machine system 34 (see FIG. 2) and a working fluid system 36 (see FIG. 3). The aircraft propulsion system 22 extends axially along an axis 38 of the aircraft propulsion system 22 between an axial upstream, forward end 40 of the aircraft propulsion system 22 and an axial downstream, aft end 42 of the aircraft propulsion system 22. Briefly, the propulsion system axis 38 may be a centerline axis of the aircraft propulsion system 22, the turbine engine 24 and/or one or more of its members. The propulsion system axis 38 may also or alternatively be a rotational axis for one or more members of the turbine engine 24.

The aircraft propulsion system 22 and its turbine engine 24 of FIG. 1 include a propulsor section 44 (e.g., a fan section), a compressor section 45, a combustor section 46 and a turbine section 47. The compressor section 45 of FIG. 1 includes a low pressure compressor (LPC) section 45A and a high pressure compressor (HPC) section 45B. The turbine section 47 of FIG. 1 includes a high pressure turbine (HPT) section 47A and a low pressure turbine (LPT) section 47B. At least (or only) the LPC section 45A, the HPC section 45B, the combustor section 46, the HPT section 47A and the LPT section 47B collectively form a core 50 (e.g., a gas generator) of the turbine engine 24. The aircraft propulsion system 22 and its turbine engine 24 of FIG. 1 also include a core flowpath 52 (e.g., an annular core flowpath) and a bypass flowpath 54 (e.g., an annular bypass flowpath). The core flowpath 52 sequentially extends longitudinally through the LPC section 45A, the HPC section 45B, the combustor section 46, the HPT section 47A and the LPT section 47B from an airflow inlet 56 into the core flowpath 52 to a combustion products exhaust 58 out from the core flowpath 52. The bypass flowpath 54 extends longitudinally through a bypass duct from an airflow inlet 60 into the bypass flowpath 54 to an airflow exhaust 62 from the bypass flowpath 54, where the bypass duct may be formed by the inner housing structure 28 and the outer housing structure 30. The bypass flowpath 54 and its bypass duct are configured to bypass (e.g., are disposed radially outboard of and extend along) the engine core 50 and the inner housing structure 28.

The propulsor section 44, the LPC section 45A, the HPC section 45B, the combustor section 46, the HPT section 47A and the LPT section 47B may be sequentially arranged along the propulsion system axis 38 within the propulsion system housing 26. The propulsor section 44 includes a bladed propulsor rotor 64; e.g., a fan rotor. The LPC section 45A includes a bladed low pressure compressor (LPC) rotor 65. The HPC section 45B includes a bladed high pressure compressor (HPC) rotor 66. The HPT section 47A includes a bladed high pressure turbine (HPT) rotor 67. The LPT section 47B includes a bladed low pressure turbine (LPT) rotor 68. Each of these engine rotors 64-68 includes a rotor base (e.g., a disk or a hub) and a plurality of rotor blades (e.g., airfoils, vanes, etc.). The rotor blades may be arranged into one or more stages axially along the respective engine rotor 64-68. The rotor blades in each stage are arranged and may be equispaced circumferentially around the respective rotor base in an annular array. Each of the rotor blades is connected to the respective rotor base. The rotor blades, for example, may be formed integral with or mechanically fastened, welded, brazed and/or otherwise attached to the respective rotor base. Each of the rotor blades projects spanwise (e.g., radially) out from the respective rotor base to a distal tip of the respective rotor blade.

The HPC rotor 66 is coupled to and rotatable with the HPT rotor 67. The HPC rotor 66 of FIG. 1, for example, is connected to the HPT rotor 67 through a high speed shaft 70. At least (or only) the HPC rotor 66, the HPT rotor 67 and the high speed shaft 70 collectively form a high speed rotating structure 72A; e.g., a high speed spool of the turbine engine 24 and its engine core 50. This high speed rotating structure 72A of FIG. 1 and its members 66, 67 and 70 are rotatable about the propulsion system axis 38. However, it is contemplated the high speed rotating structure 72A may alternatively be rotatable about another axis radially and/or angularly offset from the rotational axis of the propulsor rotor 64 and/or the centerline axis of the turbine engine 24.

The LPC rotor 65 is coupled to and rotatable with the LPT rotor 68. The LPC rotor 65 of FIG. 1, for example, is connected to the LPT rotor 68 through a low speed shaft 74. At least (or only) the LPC rotor 65, the LPT rotor 68 and the low speed shaft 74 collectively form a low speed rotating structure 72B; e.g., a low speed spool of the turbine engine 24 and its engine core 50. This low speed rotating structure 72B of FIG. 1 and its members 65, 68 and 74 are rotatable about the propulsion system axis 38. However, it is contemplated the low speed rotating structure 72B may alternatively be rotatable about another axis radially and/or angularly offset from the rotational axis of the propulsor rotor 64 and/or the centerline axis of the turbine engine 24.

The low speed rotating structure 72B is coupled to the propulsor rotor 64 through a propulsor drivetrain 76. The propulsor drivetrain 76 may be configured as a geared drivetrain, where a geartrain 78 (e.g., a transmission, a speed change device, an epicyclic geartrain, etc.) is disposed between and operatively couples the propulsor rotor 64 to the low speed rotating structure 72B and its LPT rotor 68. With this arrangement, the propulsor rotor 64 may rotate at a different (e.g., slower) rotational speed than the low speed rotating structure 72B and its LPT rotor 68. Here, the propulsor rotor 64 and the low speed rotating structure 72B may rotate in a common (the same) direction about the propulsion system axis 38 or in opposite directions about the propulsion system axis 38 depending, for example, upon the specific configuration of the geartrain 78. Alternatively, the propulsor drivetrain 76 may be configured as a direct-drive drivetrain, where the geartrain 78 is omitted. With such an arrangement, the propulsor rotor 64 rotates at a common (the same) rotational speed as the low speed rotating structure 72B and its LPT rotor 68.

The inner housing structure 28 of FIG. 1 includes an inner case 80 (e.g., a core case) for the turbine engine 24, an inner nacelle structure 82 (sometimes referred to as an inner fixed structure (IFS)) and an internal inner housing compartment 84 (e.g., an engine core compartment). The inner case 80 is disposed radially outboard of, extends axially along and may circumscribe one or more or all of the engine sections 45A-47B and the engine rotors 65-68. The inner case 80 may thereby house and provide a support structure for the respective engine sections 45A-47B and the engine rotors 65-68. The inner nacelle structure 82 is configured to provide an aerodynamic cover over the engine core 50 and its inner case 80. The inner housing structure 28 and its inner nacelle structure 82 may form a radial inner peripheral boundary of the bypass flowpath 54. The inner housing compartment 84 of FIG. 1 is formed by and is disposed radially between the inner case 80 and an inner barrel of the inner nacelle structure 82.

The outer housing structure 30 of FIG. 1 includes an outer case 86 (e.g., a fan case) for the turbine engine 24, an outer nacelle structure 88 and an internal outer housing compartment 89. The outer case 86 is disposed radially outboard of, extends axially along and may circumscribe the propulsor section 44 and its propulsor rotor 64. The outer case 86 may thereby house and may be configured as a containment structure for the propulsor section 44 and its propulsor rotor 64. The outer nacelle structure 88 is configured to provide an aerodynamic cover over the outer case 86. The outer housing compartment 89 of FIG. 1 is at least partially formed by and disposed radially between the outer case 86 and an outer portion (e.g., fan cowls) of the outer nacelle structure 88. The outer housing structure 30 and its outer nacelle structure 88 may form a radial outer peripheral boundary of the bypass flowpath 54.

During operation of the aircraft propulsion system 22 of FIG. 1, ambient air from an environment 92 external to the aircraft and its aircraft propulsion system 22 enters the aircraft propulsion system 22 and its turbine engine 24 through an airflow inlet 94. This air is propelled by the rotating propulsor rotor 64 in a downstream, aft direction towards the propulsion system aft end 42.

An outer stream of the air propelled by the rotating propulsor rotor 64 is directed into the bypass flowpath 54 through its bypass inlet 60. This air entering the bypass flowpath 54 may be referred to as "bypass air". The guide vane structure 32 conditions (e.g., straightens out, de-swirls, etc.) the flow of the bypass air within the bypass duct. This conditioned bypass air is subsequently directed out of the aircraft propulsion system 22 through the bypass exhaust 62 to provide forward thrust. The propulsion of the bypass air may account for a majority of the forward thrust generated by the aircraft propulsion system 22 and its turbine engine 24 of FIG. 1.

An inner stream of the air propelled by the rotating propulsor rotor 64 is directed into the core flowpath 52 through its core inlet 56. This air entering the core flowpath 52 may be referred to as "core air". This core air is compressed by the LPC rotor 65 and the HPC rotor 66 and is directed into a combustion chamber 96 (e.g., annular combustion chamber) of a combustor 98 (e.g., annular combustor) in the combustor section 46. Fuel is injected into the combustion chamber 96 by one or more fuel injectors 100 and mixed with the compressed core air to provide a fuel-air mixture. This fuel-air mixture is ignited and combustion products thereof flow through and sequentially drive rotation of the HPT rotor 67 and the LPT rotor 68. The rotation of the HPT rotor 67 and the LPT rotor 68 respectively drive rotation of the HPC rotor 66 and the LPC rotor 65 and, thus, compression of the air received from the core inlet 56. The rotation of the LPT rotor 68 also drives rotation of the propulsor rotor 64 through the propulsor drivetrain 76.

While the turbine engine 24 in FIG. 1 is shown with a particular two rotating structure arrangement, the present disclosure is not limited thereto. For example, the LPC rotor 65 may be omitted to configure the LPT rotor 68 as a power turbine (PT) rotor for the propulsor rotor 64. In another example, the turbine engine 24 may also include another rotating structure; e.g., an intermediate speed spool for the turbine engine 24 and its engine core 50.

Referring to FIG. 2, the electric machine system 34 is electrically coupled to an optional electric accessory system 102 and an electrical system 104 for the aircraft and its aircraft propulsion system 22. The electric machine system 34 of FIG. 2 includes at least (or only) one electric machine 106 and at least (or only) one electric machine (EM) controller 108 (e.g., an electronic controller) for the electric machine 106. For ease of description, the electric machine 106 of FIG. 2 is described below as being electrically coupled to, controlled by and/or otherwise associated with the single, dedicated EM controller 108. However, it is contemplated a single EM controller may alternatively be electrically coupled to, may control and/or may otherwise be associated with multiple electric machines. It is also contemplated multiple EM controllers may be electrically coupled to, may control and/or may otherwise be associated with the single electric machine.

The electric machine of FIG. 2 includes an electric machine rotor 110, an electric machine stator 112 and an electric machine housing 114; e.g., a case. The machine rotor 110 is rotatable about a rotational axis 116 of the machine rotor 110. This electric machine (EM) axis 116 may be a centerline axis of the electric machine 106. The machine stator 112 of FIG. 2 is radially outboard of and circumscribes the machine rotor 110. With this arrangement, the electric machine 106 is configured as a radial flux electric machine. The electric machine 106 of the present disclosure, however, is not limited to such an exemplary rotor-stator configuration nor to radial flux arrangements. The machine rotor 110, for example, may alternatively be radially outboard of and circumscribe the machine stator 112. In another example, the machine rotor 110 may be axially next to the machine stator 112 configuring the electric machine 106 as an axial flux electric machine. Referring again to FIG. 2, the machine rotor 110 and the machine stator 112 are at least partially or completely housed within an interior of the machine housing 114.

The electric machine 106 may be operatively coupled to a respective one of the engine rotating structures 72A, 72B (generally referred to as "72"). The machine rotor 110 of FIG. 2, for example, is mechanically coupled to and rotatable with the respective engine rotating structure 72 through an engine-electric machine drivetrain 118. This engine-electric machine drivetrain 118 may be configured as or otherwise include a shaft, a tower shaft assembly, an accessory gearbox, an angle gearbox, and/or the like. For ease of description, the machine rotor 110 of FIG. 2 is described below as being coupled to and rotatable with a unique one of the engine rotating structures 72 of the turbine engine 24. However, it is contemplated the machine rotor 110 may alternatively be coupled to and rotatable with multiple engine rotating structures (e.g., 72A and 72B), directly or through another device such as a differential or a clutch system. In addition, while the electric machine 106 is described above as being coupled to the respective engine rotating structure 72, it is contemplated the machine rotor 110 may also or alternatively be operatively coupled to another rotating device through the engine-electric machine drivetrain 118 such as, but not limited to, a pump rotor, an auxiliary compressor rotor, an actuator rotor, or the like.

The electric machine 106 of FIG. 2 may be configurable as an electric motor and/or an electric generator; e.g., an electric motor-generator. For example, during a motor mode of operation, the electric machine 106 may operate as the electric motor to convert electricity received from the aircraft electrical system 104 into mechanical power. The machine stator 112, for example, may generate an electromagnetic field with the machine rotor 110 using a current of electricity received from the aircraft electrical system 104 through the respective EM controller 108. This electromagnetic field may drive rotation of the machine rotor 110. The machine rotor 110, in turn, may provide mechanical power to and drive rotation of the respective engine rotating structure 72 through the engine-electric machine drivetrain 118. This mechanical power may be provided to boost power or completely power the rotation of the respective engine rotating structure 72. By contrast, during a generator mode of operation, the electric machine 106 may operate as the electric generator to convert mechanical power received from the respective engine rotating structure 72 into electricity. Rotation of the machine rotor 110, for example, may be rotationally driven by rotation of the respective engine rotating structure 72 through the engine-electric machine drivetrain 118. The rotation of the machine rotor 110 may generate an electromagnetic field with the machine stator 112, and the machine stator 112 may convert energy from the electromagnetic field into electricity. The electric machine 106 may then provide a current of electricity to the aircraft electrical system 104 through the EM controller 108 for storage and/or further use. The electric machine 106 of the present disclosure, however, is not limited to such exemplary operation. For example, the electric machine 106 may alternatively be configured as a dedicated electric generator; e.g., without the electric motor functionality. In another example, the electric machine 106 may alternatively be configured as a dedicated electric motor; e.g., without the electric generator functionality.

The EM controller 108 includes a controller housing 120 and internal controller circuitry 122. The controller housing 120 may be configured as an enclosed case (e.g., a closed or sealed container) for the respective controller circuitry 122. The controller circuitry 122 is disposed within an interior of the controller housing 120; e.g., an internal chamber or other volume(s) within and enclosed by the controller housing 120. The controller circuitry 122 includes various electrical components, connectors and the like. Examples of the electrical components include, but are not limited to, printed circuit board(s) (PCB(s)), electrical inductor(s), electrical inverter(s), electrical amplifier(s), electrical switch(es) (e.g., contactor(s), relay(s), etc.), processing device(s), memory module(s), communication module(s), electrical transformer(s), electrical rectifier(s), and/or the like.

The EM controller 108 is electrically coupled to the electric machine 106 through one or more electrical couplings 124. More particularly, the controller circuitry 122 of the EM controller 108 is electrically coupled to the electric machine 106 and its machine stator 112 through the electrical couplings 124. Similarly, the EM controller 108 is electrically coupled to an electrical distribution bus 126 of the aircraft electrical system 104 through one or more electrical couplings 128. More particularly, the controller circuitry 122 of the EM controller 108 is electrically coupled to the aircraft electrical system 104 and its electrical distribution bus 126 through the electrical couplings 128. Examples of the electrical couplings 124 and 128 include, but are not limited to, high voltage electric cables, power feeder cables, power buses, and/or the like.

The EM controller 108 and its controller circuitry 122 are configured to control operation of the electric machine 106. For example, when operating as the electric motor, the EM controller 108 and its controller circuitry 122 are configured to regulate a flow of electricity from the aircraft electrical system 104 to the electric machine 106. This electricity flow regulation may include: (a) turning-on the flow of electricity from the aircraft electrical system 104 to the electric machine 106 (e.g., electrically coupling the electric machine 106 to the aircraft electrical system 104); (b) turning-off the flow of electricity from the aircraft electrical system 104 to the electric machine 106 (e.g., electrically decoupling the electric machine 106 from the aircraft electrical system 104); (c) moderating the flow of electricity from the aircraft electrical system 104 to the electric machine 106. Here, each EM controller 108 operates as a motor controller. In another example, when operating as the electric generator, each EM controller 108 and its controller circuitry 122 are configured to regulate a flow of electricity from the electric machine 106 to the aircraft electrical system 104. This electricity flow regulation may include: (a) turning-on the flow of electricity from the electric machine 106 to the aircraft electrical system 104 (e.g., electrically coupling the electric machine 106 to the aircraft electrical system 104); (b) turning-off the flow of electricity from the electric machine 106 to the aircraft electrical system 104 (e.g., electrically decoupling the electric machine 106 from the aircraft electrical system 104); (c) moderating the flow of electricity from the electric machine 106 to the aircraft electrical system 104. Here, the EM controller 108 operates as a generator controller.

The electric accessory system 102 includes one or more electric devices 130. The electric devices 130 may include one or more electric actuators, one or more electric pumps, one or more electric valves and/or one or more fluid separator(s) (e.g., de-oiler(s)). The electric actuator(s) may include one or more electric linear actuators and/or one or more electric rotary actuators. The electric pump(s) may include one or more electric liquid pumps and/or one or more electric gas pumps (e.g., electric air compressor(s)). The electric devices 130 of FIG. 2 may be configured as part of one or more sub-systems for the aircraft propulsion system 22 and its turbine engine 24. Examples of these sub-systems include, but are not limited to: a fuel system for delivering the fuel to the fuel injectors 100 (see FIG. 1); a lubrication system for delivering lubricant (e.g., oil) to one or more lubricated components (e.g., bearing(s), gear system(s), seal system(s), etc.) of the aircraft propulsion system 22 and its turbine engine 24; a cooling system for delivering coolant (e.g., liquid coolant, air, etc.) to one or more fluid cooled components of the aircraft propulsion system 22 and its turbine engine 24; and an actuation system for moving one or more adjustable components (e.g., variable guide vanes, a variable area nozzle, etc.) of the aircraft propulsion system 22 and its turbine engine 24. One, some or all of these sub-systems may be discrete (e.g., operationally, mechanically, fluidly, etc. independent) from one another. Alternatively, some of the sub-systems may be integrated to share, for example, a common working fluid such as the lubricant or the fuel. The present disclosure, however, is not limited to the foregoing exemplary electric devices or sub-systems which may include those electric devices.

Each electric device 130 is electrically coupled to the electrical distribution bus 126 of the aircraft electrical system 104 through one or more electrical couplings 132 (collectively schematically shown); e.g., high voltage electric cables, power feeder cables, power buses, and/or the like. Each electric device 130 may thereby receive a current of electricity from the aircraft electrical system 104 to power operation thereof.

The aircraft electrical system 104 includes the electrical distribution bus 126. This aircraft electrical system 104 may also include a power source 134 and/or a power storage 136. The electrical distribution bus 126 is electrically coupled to the electric machine 106 through the respective EM controller 108. The electrical distribution bus 126 is electrically coupled to each of the electric devices 130. The electrical distribution bus 126 is also electrically coupled to the power source 134 and the power storage 136 through one or more respective electrical couplings 138 and 140; e.g., high voltage electric cables, power feeder cables, power buses, and/or the like. With this arrangement, the electrical distribution bus 126 provides an intermediate connection between the various electrical members 106 (via 108), 130, 134 and/or 136. Of course, the electrical distribution bus 126 may also be electrically coupled to one or more additional electric devices of the aircraft propulsion system 22 and/or one or more additional electric devices of the aircraft outside of the aircraft propulsion system 22; e.g., airframe mounted electric components, etc. Moreover, it is contemplated the electrical distribution bus 126 may (or may not) also be electrically coupled to and provide the intermediate connection with one or more additional electric devices of the aircraft propulsion system 22 and/or one or more additional electric devices of the aircraft outside of the aircraft propulsion system 22. Examples of the additional electric devices of the aircraft propulsion system 22 include, but are not limited to, sensors, actuators, pumps, valves, an electronic engine controller for the turbine engine, and/or the like. Examples of the additional electric devices of the aircraft outside of the aircraft propulsion system 22 include, but are not limited to, electric devices mounted with an airframe of the aircraft.

The power source 134 is configured to generate electricity and provide that electricity to the electrical distribution bus 126. The power source 134, for example, may be configured as an electric generator powered by the turbine engine 24 (see FIG. 1). In another example, the power source 134 may be configured as an electric generator powered by another aircraft powerplant; e.g., an engine of a companion aircraft propulsion system, an engine of an auxiliary power unit (APU), a fuel cell system, and/or the like.

The power storage 136 is configured to receive electricity from the electrical distribution bus 126 and store that received electricity as potential energy. The power storage 136 is also configured to release the stored potential energy as electricity output into the electrical distribution bus 126. The power storage 136, for example, may be configured as or otherwise include a battery or an array of batteries (e.g., a battery pack). In another example, the power storage 136 may be configured as or otherwise include one or more capacitors; e.g., supercapacitors.

Referring to FIG. 3, the working fluid system 36 is configured to (a) facilitate air ventilation and/or (b) service (e.g., cool and/or lubricate) one or more components 142 of the aircraft powerplant 20 and its aircraft propulsion system 22. The working fluid system 36 of FIG. 3, for example, is configured to facilitate ventilation of the inner housing compartment 84 (or another volume internal to the aircraft propulsion system 22). This working fluid system 36 of FIG. 3 is also configured as a heat exchange and/or lubrication system for the powerplant components 142. For ease of description, the powerplant components 142 are described below as including at least (or only) the electric machine 106 and/or the EM controller 108. The working fluid system 36 of the present disclosure, however, is not limited to such an exemplary arrangement. For example, the powerplant components 142 may also or alternatively include one or more additional electric machines (e.g., electric motor(s), electric generator(s), electric motor-generator(s)), one or more additional electric machine controllers (e.g., motor controller(s), generator controller(s), motor-generator controller(s)), other electric devices of the electric machine system 34 (e.g., the power distribution bus 126 of FIG. 2), an onboard engine controller (e.g., a FADEC), and/or the like. The powerplant components 142 may also or alternatively include one or more components of the turbine engine 24 and its engine core 50 (see FIG. 1). Examples of these engine components include, but are not limited to, engine bearing(s) supporting the low speed rotating structure 72B (see FIG. 1), engine bearing(s) supporting the high speed rotating structure 72A (see FIG. 1), engine bearing(s) supporting the propulsor rotor 64 (see FIG. 1), internal component(s) of and/or support components for the geartrain 78 (see FIG. 1), internal component(s) of and/or support components for the engine-electric machine drivetrain(s) 118 (see FIG. 2), lubricated seal member(s), and/or engine heat exchanger(s). Referring again to FIG. 3, the working fluid system 36 includes a (e.g., closed loop) system fluid circuit 144, a (e.g., open loop) system air circuit 146 and a heat exchanger 148.

The system fluid circuit 144 is configured to cool and/or lubricate the one or more powerplant components 142. The system fluid circuit 144 includes a fluid circuit path 150, a fluid circuit portion of the heat exchanger 148, a fluid circuit reservoir 152 and a fluid circuit pump 154. Of course, it is contemplated the system fluid circuit 144 may (or may not) also include one or more additional fluid circuit components arranged along the fluid circuit path 150 such as, but not limited to, filter(s), sensor(s), additional heat exchanger(s), additional powerplant component(s), valve(s), pump(s), etc. The heat exchanger 148, the fluid circuit reservoir 152 and the fluid circuit pump 154 are arranged inline along the fluid circuit path 150. The fluid circuit path 150 of FIG. 3, for example, serially extends longitudinally through the heat exchanger 148, the fluid circuit reservoir 152 and the fluid circuit pump 154 in a closed loop. The fluid circuit path 150 of FIG. 3 is also (a) fluidly coupled to and may extend in series or in parallel through and/or (b) may be otherwise arranged in thermal communication with the powerplant components 142. Note, while the powerplant components 142 are shown as being upstream of the heat exchanger 148 along the fluid circuit path 150, it is contemplated one or more or all of these powerplant components 142 may alternatively be downstream of the heat exchanger 148 along the fluid circuit path 150. In addition or alternatively, while the fluid circuit reservoir 152 is shown as being downstream of the heat exchanger 148 along the fluid circuit path 150, it is contemplated the fluid circuit reservoir 152 may alternatively be upstream of the heat exchanger 148 along the fluid circuit path 150. The present disclosure therefore is not limited to the exemplary system fluid circuit arrangement shown in FIG. 3.

The fluid circuit reservoir 152 is configured to contain a quantity of a working fluid before, during and/or after fluid system operation. The fluid circuit reservoir 152, for example, may be configured as or otherwise include a tank, a cylinder, a pressure vessel, a bladder or any other type of (e.g., liquid) storage container. The working fluid stored within the fluid circuit reservoir 152 (and circulated through the system fluid circuit 144 and its fluid circuit path 150) may be a liquid working fluid such as lubricant, coolant, hydraulic fluid and/or the like.

The fluid circuit pump 154 of FIG. 3 is configured to direct and/or regulate a flow of the working fluid longitudinally through the fluid circuit path 150 from an outlet from (e.g., a supply of) the fluid circuit reservoir 152, through the powerplant components 142 and the heat exchanger 148, to an inlet into (e.g., a return of) the fluid circuit reservoir 152.

The system air circuit 146 is configured to direct a flow of pressurized air into the inner housing compartment 84 (or another volume internal to the aircraft propulsion system 22). This system air circuit 146 is also configured to facilitate cooling of the working fluid flowing (e.g., circulating) through the system fluid circuit 144 and its fluid circuit path 150. The system air circuit 146 includes an air circuit path 156, an air circuit portion of the heat exchanger 148 and an air circuit flow regulator 158. Of course, it is contemplated the system air circuit 146 may (or may not) also include one or more additional components arranged along the air circuit path 156 such as, but not limited to, filter(s), sensor(s), additional heat exchanger(s), etc. The heat exchanger 148 and the air circuit flow regulator 158 are arranged inline along the air circuit path 156. The air circuit path 156 of FIG. 3, for example, serially extends longitudinally through the heat exchanger 148 and the air circuit flow regulator 158 from an airflow inlet 160 into the system air circuit 146 and its air circuit path 156 to an airflow outlet 162 from the system air circuit 146 and its air circuit path 156.

An air source 164 such as the bypass flowpath 54 is fluidly coupled to the system air circuit 146 and its air circuit path 156 through the air circuit inlet 160. The air circuit inlet 160, for example, may be formed by, disposed in and/or otherwise configured with an exterior of a vane structure such as a bifurcation structure 166; e.g., an upper or lower bifurcation structure. Referring to FIG. 1, the bifurcation structure 166 is disposed in the bypass flowpath 54 and is connected to the inner housing structure 28 and the outer housing structure 30. The bifurcation structure 166 of FIG. 1, more particularly, extends radially across the bypass flowpath 54 from the inner housing structure 28 and its inner nacelle structure 82 to the outer housing structure 30 and its outer nacelle structure 88. The bifurcation structure 166 may thereby circumferentially bifurcate a longitudinal section of the bypass flowpath 54. The air circuit inlet 160 may be disposed at (e.g., on, adjacent or proximate) or near a leading edge 168 of the bifurcation structure 166. Alternatively, the air circuit inlet 160 may be disposed along a side of the bifurcation structure 166, downstream from the structure leading edge 168. The present disclosure, however, is not limited to such exemplary air circuit inlet locations. The air circuit inlet 160, for example, may alternatively be disposed at or near the inner peripheral boundary of the bypass flowpath 54 or the outer peripheral boundary of the bypass flowpath 54. Still alternatively, it is contemplated the air circuit inlet 160 may fluidly couple the system air circuit 146 and its air circuit path 156 to another internal volume (e.g., flowpath, etc.) within the aircraft propulsion system 22.

Referring to FIG. 3, an air sink 170 such as the inner housing compartment 84 is fluidly coupled to the system air circuit 146 and its air circuit path 156 through the air circuit outlet 162. The air circuit outlet 162, for example, may be formed by, disposed in and/or otherwise configured with a wall or other structure forming a peripheral boundary of the inner housing compartment 84, or disposed in the inner housing compartment 84. The system air circuit 146 and its air circuit path 156 may thereby extend longitudinally between and fluidly couple two discrete volumes internal to the aircraft propulsion system 22. The present disclosure, however, is not limited to such an exemplary arrangement. For example, the air circuit outlet 162 may alternatively fluidly couple the system air circuit 146 and its air circuit path 156 to another internal volume (e.g., passage, flowpath, cavity, etc.) within the aircraft propulsion system 22.

The air circuit flow regulator 158 is configured to regulate a flow of air (e.g., pressurized air such as bled bypass air) (a) received by the system air circuit 146 and its air circuit path 156 through the air circuit inlet 160, (b) directed through the heat exchanger 148 and/or (c) directed into the inner housing compartment 84 through the air circuit outlet 162. The air circuit flow regulator 158, for example, may be configured as or otherwise include a flow diverter, a control valve or a valve system. When the air circuit flow regulator 158 is in an open arrangement, the flow of air received from the heat exchanger 148 may pass substantially unimpeded through the air circuit flow regulator 158 downstream to the air circuit outlet 162. When the air circuit flow regulator 158 is in a closed arrangement, the air circuit flow regulator 158 may fluidly cut off the flow of air through the air circuit flow regulator 158 downstream to the air circuit outlet 162 (or reduce the flow of air through the air circuit flow regulator 158 to a minimum value). By cutting off or reducing the airflow to the air circuit outlet 162, the air circuit flow regulator 158 may also functionally stop or reduce airflow into the system air circuit 146 and its air circuit path 156 upstream of the air circuit flow regulator 158 through the air circuit inlet 160. Of course, the air circuit flow regulator 158 may (or may not) also be configurable in one or more intermediate arrangements (e.g., partially open or closed arrangements) where the air circuit flow regulator 158 meters the flow of air through the air circuit flow regulator 158 downstream to the air circuit outlet 162.

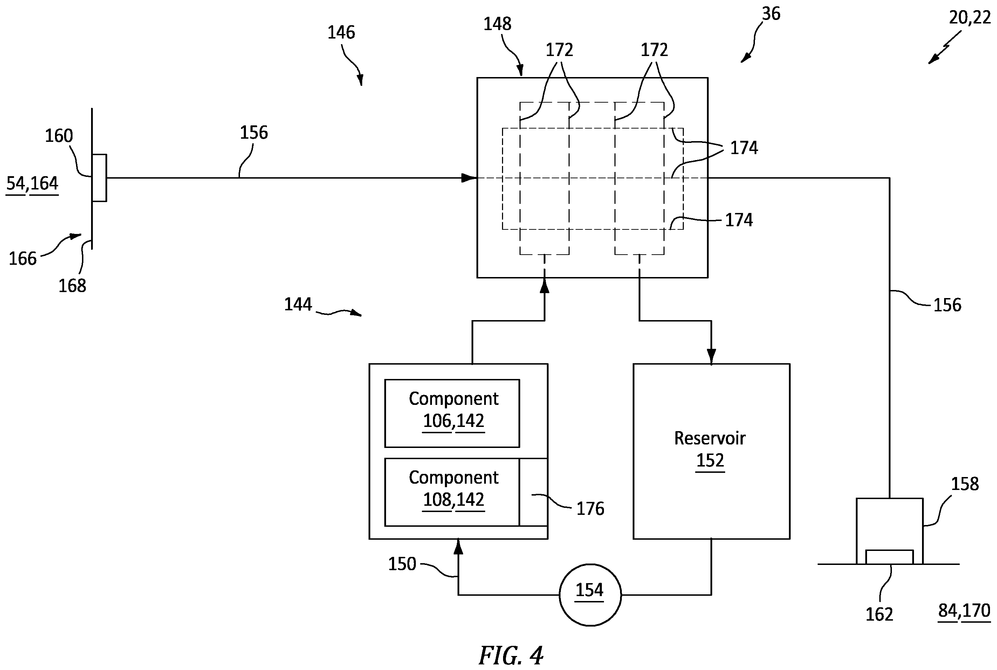

The air circuit flow regulator 158 may be disposed longitudinally between the heat exchanger 148 and the air circuit outlet 162 along the air circuit path 156. The air circuit flow regulator 158 of FIG. 3, for example, is (e.g., slightly) longitudinally spaced upstream from the air circuit outlet 162 along the air circuit path 156. This air circuit flow regulator 158 is also longitudinally spaced downstream from the heat exchanger 148 along the air circuit path 156. The present disclosure, however, is not limited to such an exemplary air circuit flow regulator location. For example, referring to FIG. 4, the air circuit flow regulator 158 may be disposed at and may form the air circuit outlet 162.

Referring to FIGS. 3 and 4, the heat exchanger 148 includes one or more internal fluid circuit passages 172 and one or more internal air circuit passages 174. Each of these circuit passages 172, 174 may be partially or completely formed by the heat exchanger 148. Each of the circuit passages 172, 174 also extends within and/or through the heat exchanger 148. The fluid circuit passages 172 may form at least a section of or may otherwise be fluidly coupled inline with the fluid circuit path 150. The air circuit passages 174 may form at least a section of or may otherwise be fluidly coupled inline with the air circuit path 156. The fluid circuit passages 172 are fluidly discrete from the air circuit passages 174 within the heat exchanger 148. Within the heat exchanger 148, the fluid circuit passages 172 and the air circuit passages 174 may be arranged to configure the heat exchanger 148 as a crossflow heat exchanger, a counterflow heat exchanger, a parallel flow heat exchanger, or a hybrid heat exchanger with a combination crossflow, counterflow and/or parallel flow arrangement.

During operation of the working fluid system 36 of FIG. 3, the fluid circuit pump 154 directs (e.g., pumps) relatively cool working fluid out of the fluid circuit reservoir 152, through the fluid circuit path 150, into at least one of the powerplant components 142 (e.g., the electric machine 106) and/or into a heat exchanger 176 (e.g., cooling plate) in thermal communication with at least one of the powerplant components 142 (e.g., the EM controller 108). As the working fluid flows through the respective powerplant components 142 (e.g., the electric machine 106) and/or the heat exchanger 176 in thermal communication with the respective powerplant component 142 (e.g., the EM controller 108), heat energy generated by the powerplant components 142 (e.g., the electric machine 106 and/or the EM controller 108) may be transferred into the working fluid. The heat energy transfer may thereby dissipate the heat energy in (e.g., cool) the powerplant components 142 (e.g., the electric machine 106 and/or the EM controller 108) while also heating the working fluid. The working fluid may also lubricate one or more internal components within at least one of the powerplant components 142 (e.g., the electric machine 106). The now heated working fluid is directed away from the powerplant components 142 (e.g., the electric machine 106 and/or the EM controller 108), through the fluid circuit path 150, to the heat exchanger 148. Within the heat exchanger 148, at least some or all of the heat energy previously transferred into the working fluid from the powerplant components 142 (e.g., the electric machine 106 and/or the EM controller 108) is transferred out of the working fluid into the air flowing through the system air circuit 146, thereby cooling the working fluid. The now cooled working fluid is directed from the heat exchanger 148, through the fluid circuit path 150, back into the fluid circuit reservoir 152 for subsequent recirculation. Concurrently, the air that was heated in the heat exchanger 148 is exhausted from the system air circuit 146 into the inner housing compartment 84 through the air circuit outlet 162. Directing this air into the inner housing compartment 84 from the system air circuit 146 may facilitate ventilating the inner housing compartment 84. Directing the air into the inner housing compartment 84 from the system air circuit 146 may also facilitate impingement and/or convective cooling of one or more components within and/or bordering the inner housing compartment 84 (the air sink 170). Of course, as cooling requirements for the working fluid change (e.g., as a temperature of the working fluid increases or decreases) and/or air requirements for the inner housing compartment 84 change, the air circuit flow regulator 158 may be actuated to control how much of the air is directed to the heat exchanger 148 and/or into the inner housing compartment 84 and, thus, is available for the foregoing processes.

By arranging the air circuit flow regulator 158 downstream of the heat exchanger 148 along the system air circuit 146 and its air circuit path 156, the heat energy generated by operation of the powerplant components 142 (e.g., the electric machine 106 and/or the EM controller 108) may be utilized to prevent and/or reduce icing of the air circuit flow regulator 158. More particularly, by heating the air in the system air circuit 146 and its air circuit path 156 at the heat exchanger 148, this heated air may in turn heat water vapor and/or melt ice particles entrained in the air prior to reaching the air circuit flow regulator 158. The heated air may also buffer and/or convectively heat the air circuit flow regulator 158 prior to being exhausted into the inner housing compartment 84. Moreover, the heat exchanger 148 may also operate as an air filter upstream of the air circuit flow regulator 158 and prevent larger ice particles from reaching the air circuit flow regulator 158. Note, these larger ice particles may be melted by the relatively warm heat exchanger 148. With such arrangements as shown in FIGS. 3 and 4, the air circuit flow regulator 158 may be configured without a supplemental anti-icing system. Hereto, the system air circuit 146 may be configured without any other flow regulator along the air circuit path 156 between the air circuit inlet 160 and the heat exchanger 148. The present disclosure, however, is not limited to the exemplary arrangements of FIGS. 3 and 4. For example, in other embodiments, the air circuit flow regulator 158 may be configured with a backup anti-icing system for redundancy.

In some embodiments, referring to FIG. 1, the heat exchanger 148 may be disposed within an interior of the bifurcation structure 166. The present disclosure, however, is not limited to such an exemplary arrangement. The heat exchanger 148, for example, may alternatively be disposed radially inboard of the bypass flowpath 54, for example in the inner housing compartment 84.

In some embodiments, referring to FIG. 2, the electric machine 106 may be disposed within the inner housing compartment 84. In addition or alternatively, the EM controller 108 may be disposed within the outer housing compartment 89. The present disclosure, however, is not limited to such an exemplary arrangement. For example, both of the electric machine members 106 and 108 may alternatively be disposed within the inner housing compartment 84 or the outer housing compartment 89. In another example, one or both of the electric machine members 106 and 108 may be disposed within the bifurcation structure 166 (see FIG. 1), or otherwise.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for an aircraft powerplant (20), comprising:
an electric device (106, 108); and
a working fluid system (36) including a fluid circuit (144), an air circuit (146) and a heat exchanger (148);
the fluid circuit (144) comprising a fluid circuit path (150) that extends through the heat exchanger (148), the fluid circuit (144) configured to direct a working fluid through the fluid circuit path (150) to service the electric device (106, 108);
the air circuit (146) comprising an air circuit path (156) and a flow regulator (158), the air circuit path (156) extending through the heat exchanger (148) and the flow regulator (158) from an airflow inlet (160) into the air circuit (156) to an airflow outlet (162) from the air circuit (146), the air circuit (145) configured to receive air into the air circuit path (156) through the airflow inlet (160) from an air source (54, 164), and the air circuit (146) configured to exhaust the air from the air circuit path (156) through the airflow outlet (162) into an air sink (84, 170) that is different than the air source (54, 164); and
the heat exchanger (148) configured to transfer heat energy between the working fluid in the fluid circuit (144) and the air in the air circuit (146).

2. The assembly of claim 1, wherein
the heat exchanger (148) is configured to transfer the heat energy from the working fluid into the air to provide heated air, and
the air circuit (146) is configured to use the heated air to at least one of prevent or reduce icing at the flow regulator (158).

3. The assembly of claim 1 or 2, wherein the electric device (106, 108) comprises an electric machine (106) configurable as at least one of an electric motor or an electric generator.

4. The assembly of claim 3, further comprising:
an engine core (50) including a compressor section (45), a combustor section (46) and a turbine section (47);
a flowpath (52) extending through the compressor section (45), the combustor section (46) and the turbine section (47); and
a rotating structure (72A, 72B) operatively coupled to the electric machine (106), the rotating structure comprising a bladed rotor (65, 66, 67 68) in the compressor section (45) or the turbine section (47).

5. The assembly of claim 3 or 4, wherein the fluid circuit (144) is configured to direct the working fluid through the fluid circuit path (150) to at least one of cool or lubricate the electric machine (106).

6. The assembly of claim 1 or 2, wherein the electric device (106, 108) comprises an electronic controller (108).

7. The assembly of claim 6, further comprising:
an electric machine (106) configurable as at least one of an electric motor or an electric generator;
the electronic controller (108) electrically coupled to and configured to control operation of the electric machine (106).

8. The assembly of claim 6 or 7, wherein the fluid circuit (144) is configured to direct the working fluid through the fluid circuit path (150) to cool the electronic controller (108).

9. The assembly of any preceding claim, wherein the flow regulator (158) comprises a control valve configured to meter a flow of the air through the air circuit path (156).

10. The assembly of any preceding claim, wherein the air circuit (146) is configured without a flow regulator along the air circuit path (156) between the heat exchanger (148) and the airflow inlet (160).

11. The assembly of any preceding claim, further comprising:
a housing structure (86) configured to form an inner peripheral boundary of a flowpath (54) within the aircraft powerplant (20);
the flowpath (54) configured as the air source (54, 164).

12. The assembly of claim 11, wherein an internal compartment (84) within the housing structure (86) is configured as the air sink (84, 170), and optionally the electric device (106, 108) is disposed in the internal compartment (84).

13. The assembly of claim 12, wherein the aircraft powerplant (20) is a turbofan propulsion system (22), and the flowpath (54) is a bypass flowpath (54) configured to bypass an/the engine core (50) of a turbine engine (24).

14. The assembly of claim 11, 12 or 13, further comprising a vane structure(166) projecting out from the housing structure (86) across the flowpath (54), the heat exchanger (148) disposed in an interior of the vane structure (1 66), and optionally wherein the airflow inlet (160) is disposed at a leading edge (168) of the vane structure (!66).

15. The assembly of any preceding claim, wherein
the air sink (84, 170) comprises an/the internal compartment (84) within the aircraft powerplant (20); and
the air circuit (146) is configured to direct the air into the internal compartment (84) to ventilate the internal compartment (84) with the air exhausted from the air circuit (146) through the air circuit outlet (162).
